# FASCICULE DE BREVET EUROPEEN

(11) **EP 2 443 318 B1**
(45) Date de publication et mention de la délivrance du brevet: **17.12.2014**
(21) Numéro de dépôt: 10737980.2
(22) Date de dépôt: 09.06.2010
(51) Int. Cl.: F01D 9/04, F01D 5/28, B29C 70/24, C04B 35/80

(54) **ÉLÉMENT DE DISTRIBUTION DE TURBINE EN CMC, PROCÉDÉ DE FABRICATION, ET DISTRIBUTEUR ET TURBINE À GAZ L'INCORPORANT.**
LEITSCHAUFEL AUS CMC IN EINER TURBINE, HERSTELLUNGSVERFAHREN UND ENTSPRECHENDE ANORDNUNG UND ENTSPRECHENDES TURBINENTRIEBWERK
VANE PART OF A TURBINE MADE IN CMC, METHOD TO PRODUCE IT AND CORRESPONDING ASSEMBLY AND TURBINE ENGINE

(30) Priorité: 18.06.2009 FR 0954101
(43) Date de publication de la demande: 25.04.2012
(73) Titulaire: Snecma, 75015 Paris (FR); HERAKLES, 33185 Le Haillan (FR)
(72) Inventeur: COUPE, Dominique, F-33185 Le Haillan (FR); RENON, Guillaume, Jean-Claude, Robert, F-77000 Vaux Le Penil (FR)
(74) Mandataire: Joly, Jean-Jacques
(86) Numéro de dépôt international: PCT/FR2010/051149
(87) Numéro de publication internationale: WO 2010/146288

(56) Documents cités:
- EP-A1- 0 466 602
- EP-A2- 1 674 599
- WO-A1-91/15357
- FR-A1- 2 625 528
- JP-A- 2003 148 105
- US-A- 3 632 460

## Description

### Arrière-plan de l'invention

L'invention se rapporte à un distributeur de turbine en matériau composite à matrice céramique ou à matrice au moins partiellement en céramique, désigné ci-après par matériau CMC.

Le domaine d'application de l'invention est plus particulièrement celui des turbines à gaz aéronautiques ou industrielles.

L'amélioration des performances et la diminution des émissions polluantes des turbines à gaz conduit à envisager des températures de combustion de plus en plus élevées.

Pour des parties chaudes de turbine à gaz, il a donc été proposé d'utiliser des matériaux CMC en raison de leurs propriétés thermostructurales remarquables, c'est-à-dire l'association de propriétés mécaniques qui les rendent aptes à constituer des éléments de structure et de leur capacité à conserver ces propriétés mécaniques à des températures élevées. Les matériaux CMC sont typiquement formés d'un renfort fibreux en fibres réfractaires, telles que des fibres de carbone ou de céramique, densifié par une matrice en céramique ou au moins partiellement en céramique. Comme cela est bien connu, une interphase peut être présente entre les fibres et la matrice pour assurer une fonction de défragilisation du matériau composite par déviation de fissures parvenant à son niveau. Une telle interphase peut être en carbone pyrolytique (PyC), nitrure de bore (BN) ou carbone dopé au bore (BC). Des interphases de défragilisation de même type peuvent aussi être incorporées au sein de la matrice, entre des phases de matrice céramique. Dans tous les cas, au moins la phase externe de matrice est en céramique.

Le document EP 0 399 879 montre un distributeur de turbine en CMC réalisé en plusieurs parties assemblées, à savoir un moyeu à aubes et des bagues dentées qui enserrent des tenons formés aux extrémités radiales des aubes. Les parties constitutives du distributeur de turbine sont obtenues par usinage de pièces massives en CMC, ce qui entraîne d'importantes pertes de matière et provoque de multiples ruptures de fibres du renfort fibreux du CMC.

Le document EP 1 087 103 montre un élément de distributeur de turbine avec plusieurs aubes s'étendant entre un secteur de plate-forme interne annulaire et un secteur de plate-forme externe annulaire. Chaque aube est formée en deux parties : une partie en CMC à renfort fibreux tressé du côté du bord d'attaque et une partie en céramique massive du côté du bord de fuite. Les secteurs de plate-forme sont en CMC avec un renfort fibreux formé de strates superposées. Le renfort tressé de la partie en CMC des aubes se prolonge au-delà des extrémités longitudinales de l'aube pour s'insérer entre des strates du renfort fibreux des secteurs de plate-forme. L'élément de distributeur est donc en partie seulement en CMC et le renfort fibreux est en plusieurs parties séparées qui doivent être assemblées.

Le document JP 2003-148 105 montre également un élément de distributeur en une seule pièce en matériau composite à matrice céramique. Le renfort fibreux est pour partie obtenu à partir d'une ébauche tissée en forme de bande ayant une partie centrale tubulaire destinée à former une préforme d'aube et prolongée à chacune de ses extrémités par des volets situés face à face. Les volets sont dépliés de part et d'autre de la partie centrale et assemblés par couture à des strates fibreuses obtenues séparément pour former des préformes de plates-formes interne et externe. La structure fibreuse occupant tout le volume de l'élément de distributeur est donc en plusieurs parties séparées qui doivent être assemblées les unes aux autres.

Le document WO 91/15357 montre un élément de distributeur de turbine réalisé en une seule pièce en matériau composite à matrice céramique. Le renfort fibreux est obtenu à partir d'une ébauche en forme de bande qui peut être tissée mais est de préférence tricotée. La bande est pliée sur elle-même pour obtenir une préforme fibreuse pour l'élément de distributeur. Dans la partie correspondant à une aube, le pliage est réalisé de telle sorte que deux bords d'un segment de la bande viennent en position juxtaposée et sont liés par couture. Il y a donc une discontinuité dans le renfort fibreux tissé ou tricoté à la périphérie de l'aube le long d'une ligne qui s'étend dans la direction longitudinale de l'aube. Une telle discontinuité est pénalisante d'un point de vue mécanique.

Le document EP 0 466 602 divulgue aussi un élément de distributeur en une seule pièce en CMC obtenu par densification d'une préforme fibreuse. La préforme est obtenue par mise en forme de strates superposées ou d'une texture tissée tridimensionnelle. L'élément de distributeur comprend une aube avec des talons asymétriques et non avec des plates-formes interne et externe qui s'étendent de part et d'autre de la zone de raccordement avec l'aube.

### Objet et résumé de l'invention

L'invention a pour but de fournir un élément de distributeur en CMC ne présentant pas les inconvénients mentionnés plus haut.

Ce but est atteint grâce à un élément de distributeur en une seule pièce en matériau composite à matrice au moins partiellement en céramique comportant un secteur de plate-forme interne annulaire, un secteur de plate-forme externe annulaire et au moins une aube s'étendant entre les secteurs de plate-forme et raccordée à ceux-ci, les secteurs de plate-forme s'étendant de part et d'autre de la zone de raccordement avec la ou chaque aube, l'élément de distributeur étant remarquable en ce que le renfort fibreux comprend une structure fibreuse tissée par tissage tridimensionnel ou multi-couches présentant une continuité dans tout le volume de l'élément de distributeur et sur toute la périphérie de la ou chaque aube.

La présence dans tout le volume de l'élément de distributeur d'une structure fibreuse tissée de renfort présentant une continuité dans tout le volume de l'élément de distributeur, c'est-à-dire non formée par assemblage de plusieurs parties obtenues séparément, et présentant une continuité sur toute la périphérie de la ou chaque aube, c'est-à-dire sans interruption du tissage sur cette périphérie, contribue à conférer une bonne tenue mécanique. En outre, on peut obtenir directement une structure fibreuse de renfort en une seule pièce.

La ou chaque aube peut être pleine ou peut présenter un passage longitudinal interne s'étendant sur toute la longueur de l'aube et s'ouvrant au niveau des secteurs de plate-forme.

Avantageusement encore, l'élément de distributeur comprend au moins deux aubes s'étendant entre les secteurs de plate-forme et la structure fibreuse comprend des fils qui suivent un trajet continu s'étendant successivement le long d'une partie d'un ou premier secteur de plate-forme, le long d'une première aube, le long d'une partie de l'autre ou second secteur de plate-forme, le long d'une deuxième aube puis le long d'une partie du premier secteur de plate-forme.

Selon un autre de ses aspects, l'invention vise à fournir un procédé permettant la fabrication d'un élément de distributeur de turbine tel que ci-avant défini.

Un tel procédé comprend :
- la réalisation d'une ébauche fibreuse en une seule pièce tissée par tissage tridimensionnel ou multi-couches comportant, dans une direction longitudinale, au moins un motif incluant un premier segment formant une ébauche de préforme d'aube, un deuxième segment prolongeant le premier segment à une extrémité longitudinale de celui-ci en formant deux volets situés face à face, et un troisième segment prolongeant le premier segment à l'autre extrémité de celui-ci en formant deux volets situés face à face,
- le dépliage de l'ébauche avec pivotement relatif entre les volets du deuxième segment et le premier segment, de part et d'autre de celui-ci à sa première extrémité, pour amener les volets du deuxième segment sensiblement perpendiculairement au premier segment, et avec pivotement relatif entre les volets du troisième segment et le premier segment, de part et d'autre de celui-ci à sa deuxième extrémité, pour amener les volets du troisième segment sensiblement perpendiculairement au premier segment,
- la mise en forme de l'ébauche dépliée pour obtenir une préforme fibreuse de l'élément de distributeur avec au moins une partie formant préforme d'aube obtenue par mise en forme d'un premier segment et des parties formant préformes de secteurs de plate-forme obtenues à partir des volets, et
- la densification de la préforme par une matrice au moins partiellement en céramique de sorte qu'un élément de distributeur de turbine en une seule pièce est obtenu avec un renfort fibreux comprenant la préforme fibreuse qui présente une continuité dans tout le volume de l'élément de distributeur et sur toute la périphérie de la ou chaque aube.

De préférence, l'ébauche est réalisée avec un deuxième segment et un troisième segment ayant des largeurs supérieures à celle du premier segment en s'étendant latéralement au-delà du niveau des bords latéraux du premier segment.

Avantageusement alors, dans l'un au moins des deuxième et troisième segment, les deux volets sont formés chacun avec des ailes qui, à l'état non déplié, prolongent les parties des volets faisant saillie latéralement au-delà du niveau des bords longitudinaux du premier segment en s'étendant le long de ces bords tout en étant séparés de ceux-ci, et les ailes d'un volet sont amenées en recouvrement mutuel avec les ailes de l'autre volet lors du dépliage de l'ébauche. Les ailes en recouvrement mutuel peuvent être liées l'une à l'autre, par exemple par couture ou par implantation de fils ou d'aiguilles.

De préférence encore, l'ébauche fibreuse est réalisée en une seule pièce avec répétition dudit motif, le troisième segment d'un premier motif et le deuxième segment d'un deuxième motif consécutif étant dans le prolongement et la continuité l'un de l'autre et, lors du dépliage de l'ébauche, on fait pivoter dans un sens le premier segment du premier motif par rapport au troisième segment du premier motif et on fait pivoter en sens opposé le premier segment du deuxième motif par rapport au deuxième segment du deuxième motif afin d'amener les premiers segments du premier et du deuxième motif sensiblement parallèlement l'un à l'autre.

Dans ce cas, lors du dépliage de l'ébauche, un volet du deuxième segment du premier motif et un volet du troisième segment d'un motif consécutif sont amenés dans le prolongement l'un de l'autre pour pouvoir former une partie de préforme de secteur de plate-forme. Après dépliage de l'ébauche, les volets amenés dans le prolongement l'un de l'autre peuvent être liés l'un à l'autre, par exemple par couture ou par implantation de fils ou aiguilles.

Avantageusement, lors du tissage multi-couches de l'ébauche, des zones de déliaison entre deux couches sont aménagées pour former les séparations entre les deux volets d'un deuxième segment et entre les deux volets d'un troisième segment.

Avantageusement encore, lors du tissage multi-couches de l'ébauche, une zone de déliaison entre deux couches est aménagée tout le long du premier segment, la zone de déliaison s'étendant sur une partie seulement de la largeur du premier segment, à distance des bords longitudinaux de celui-ci, de manière, après mise en forme, à former une préforme fibreuse d'aube avec un passage interne s'étendant sur toute la longueur de la préforme.

L'invention vise aussi un distributeur de turbine en CMC comprenant une pluralité d'éléments de distributeur juxtaposés, chaque élément de distributeur étant tel que défini ci-avant ou étant obtenu par un procédé tel que défini ci-avant.

L'invention vise encore une turbine à gaz munie d'un tel distributeur de turbine.

### Brève description des dessins

L'invention sera mieux comprise à la lecture de la description faite ci-après, à titre indicatif mais non limitatif, en référence aux dessins annexés dans lesquels :
- la figure 1 est une vue schématique très partielle et en demi-coupe axiale d'une partie d'une turbine à gaz ;
- la figure 2 est une vue schématique en perspective d'un élément de distributeur de turbine ;
- la figure 3 montre schématiquement une ébauche fibreuse tissée destinée à la réalisation d'une préforme fibreuse pour un élément de distributeur de turbine en CMC selon un premier mode de réalisation de l'invention ;
- les figures 4, 5 et 6 sont des vues schématiques en coupe longitudinale selon les plans IV, V et VI de la figure 3 ;
- les figures 7, 8, 9 et 10 sont des vues schématiques en coupe transversale selon les plans VII, VIII, IX et X de la figure 3 ;
- la figure 11 montre schématiquement l'ébauche de la figure 3 préparée pour dépliage ;
- les figures 12 et 13 montrent l'ébauche de la figure 11 respectivement partiellement et complètement dépliée ;
- la figure 14 est une vue schématique en perspective d'une préforme d'élément de distributeur après mise en forme de l'ébauche dépliée de la figure 13 ;
- la figure 15 indique des étapes successives d'un procédé de réalisation d'un élément de distributeur de turbine en CMC ;
- la figure 16 montre schématiquement une bande tissée dans laquelle des ébauches telles que celle de la figure 3 peuvent être découpées ;
- les figures 17, 18 et 19 montrent chacune schématiquement deux plans consécutifs d'armure de tissage multi-couches pour des parties de l'ébauche fibreuse de la figure 3 correspondant aux coupes des figures 7, 8 et 9 ;
- la figure 20 montre schématiquement une ébauche fibreuse tissée destinée à la réalisation d'une préforme fibreuse pour un élément de distributeur de turbine en CMC selon un deuxième mode de réalisation de l'invention ;
- la figure 21 est une vue schématique en coupe longitudinale selon le plan XXI de la figure 20 ;
- la figure 22 montre schématiquement l'ébauche des figures 20 et 21 préparée pour dépliage en élévation latérale ;
- les figures 23 et 24 montrent l'ébauche de la figure 22 respectivement partiellement et complètement dépliée ;
- la figure 25 montre schématiquement une ébauche fibreuse tissée destinée à la réalisation d'une préforme fibreuse pour un élément de distributeur de turbine en CMC selon un troisième mode de réalisation de l'invention ;
- la figure 26 est une vue schématique en coupe longitudinale selon le plan XVI de la figure 25 ;
- la figure 27 montre schématiquement l'ébauche des figures 25 et 26 préparée pour dépliage en élévation latérale ;
- la figure 28 montre l'ébauche de la figure 27 complètement dépliée ;
- la figure 29 est une vue schématique en perspective d'un autre élément de distributeur ; et
- la figure 30 montre schématiquement une ébauche tissée destinée à la réalisation d'une préforme fibreuse pour un élément de distributeur tel que celui de la figure 29 réalisé en CMC.

### Description détaillée de modes de réalisation

L'invention vise plus particulièrement un distributeur de turbine pour turbine à gaz aéronautique ou industrielle.

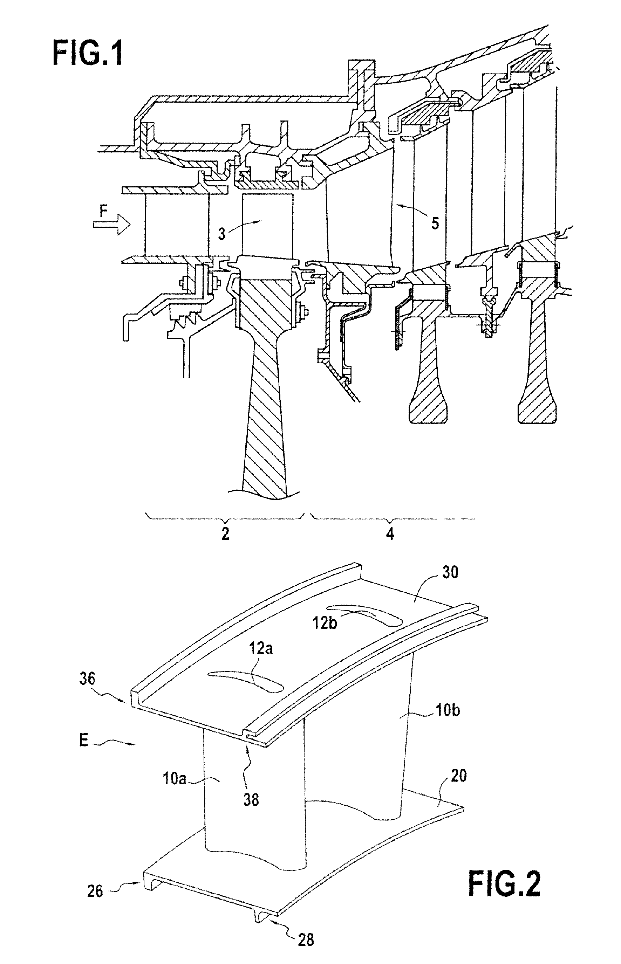

La figure 1 montre très schématiquement en demi-coupe axiale une partie de turbine haute pression (HP) 2 et une partie de turbine basse pression (BP) 4 dans une turbine à gaz à deux corps. La turbine HP 2 reçoit les gaz (flèche F) issus d'une chambre de combustion via un distributeur de turbine HP 3. La turbine BP 4 reçoit les gaz en aval de la turbine HP 2 et comprend une pluralité d'étapes de turbine comprenant chacun un distributeur de turbine BP tel que 5 et une roue mobile. Les roues mobiles des turbines HP et BP entraînent un compresseur HP et un compresseur BP ou une soufflante via des arbres respectifs coaxiaux, de façon bien connue en soi.

Les distributeurs des turbines HP et BP sont montés dans des carters. Ils comportent une plate-forme interne et une plate-forme externe annulaires, qui définissent partiellement la veine d'écoulement de flux gazeux, et une pluralité d'aubes fixes qui s'étendent entre les plate-formes en étant reliées à celles-ci. Les aubes peuvent présenter un passage longitudinal interne formant un canal d'écoulement d'air de refroidissement.

Il est connu de réaliser des distributeurs de turbine en une seule pièce ou en plusieurs éléments qui sont juxtaposés pour former un distributeur complet, chaque élément comprenant un secteur de plate-forme interne, un secteur de plate-forme externe et une ou plusieurs aubes s'étendant entre ceux-ci et reliés à ceux-ci.

L'invention s'applique ici à un distributeur de turbine HP ou à un distributeur de turbine BP formé de plusieurs éléments de distributeurs juxtaposés. Plus généralement, elle s'applique à un distributeur de corps turbine dans une turbine à gaz monocorps ou multi-corps.

La figure 2 montre un exemple d'élément de distributeur de turbine pouvant être réalisé conformément à l'invention.

L'élément de distributeur de turbine E comprend un secteur 20 de plate-forme interne annulaire, un secteur 30 de plate-forme externe annulaire et, dans l'exemple illustré, deux aubes 10a, 10b qui s'étendent entre les secteurs de plate-forme 20, 30 en étant raccordés à ceux-ci. On voit que les secteurs de plate-forme s'étendent de part et d'autre des zones de raccordement avec les aubes. Les aubes présentent des passages longitudinaux 12a, 12b qui s'ouvrent aux extrémités des aubes, au niveau des surfaces extérieures des secteurs de plate-forme 20, 30. A l'une et/ou l'autre de leurs extrémités amont et aval (dans le sens de l'écoulement du flux gazeux), les secteurs de plate-forme peuvent présenter des reliefs tels que des rebords 26, 36 ou des becquets 28, 38.

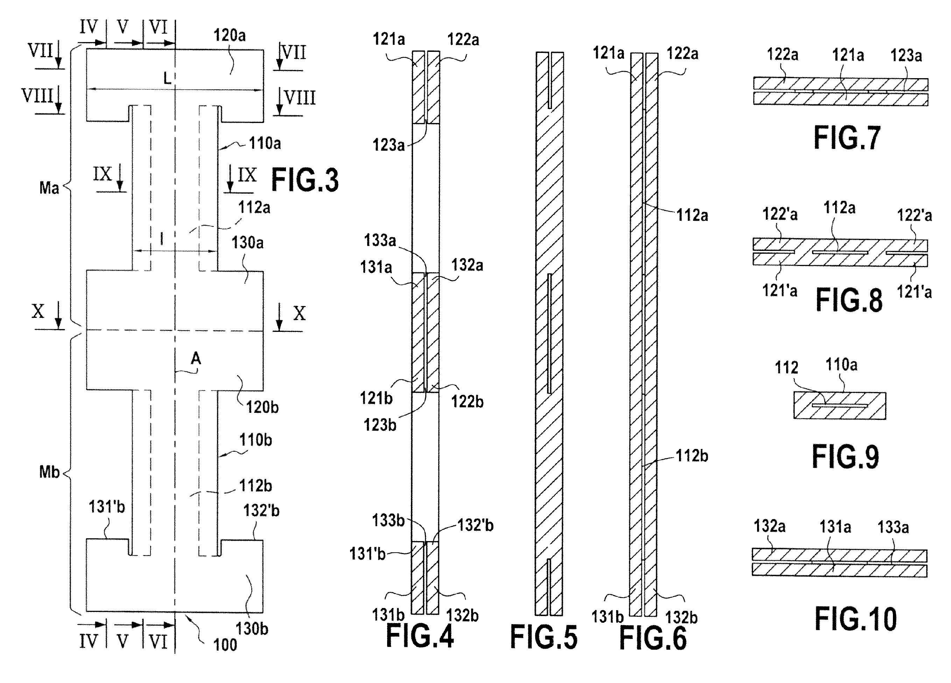

On se référera maintenant aux figures 3 à 10 qui montrent une structure fibreuse ou ébauche 100 à partir de laquelle peut être obtenue une préforme fibreuse pour réaliser un élément de distributeur de turbine tel que montré par la figure 2 en une seule pièce en CMC.

L'ébauche 100 est élaborée par tissage multi-couches, comme décrit plus loin. Dans la direction longitudinale A, l'ébauche 100 comprend deux motifs successifs similaires Ma et Mb qui, sur la figure 3 sont montrés séparés par une ligne en pointillés.

Le motif Ma inclut un premier segment 110a, un deuxième segment 120a prolongeant le segment 110a à une première extrémité longitudinale de celui-ci et un troisième segment 130a prolongeant le segment 110a à son autre extrémité longitudinale. De façon similaire, le motif Mb inclut un premier segment 110b, un deuxième segment 120b prolongeant le segment 110b à une première extrémité longitudinale de celui-ci et un troisième segment 130b prolongeant le segment 110b à son autre extrémité longitudinale. Les segments 130a et 120b se situent dans le prolongement et la continuité l'un de l'autre.

Les segments 110a et 110b sont destinés à former des parties de préforme fibreuse pour les aubes 10a, 10b. Les segments 110a et 110b ont ici approximativement une même largeur l sensiblement constante. Toutefois, on pourra conférer aux segments 110a et 110b une largeur variable reflétant une dimension transversale variable des aubes 10a, 10b, lorsque cette dimension transversale varie sensiblement. Les segments 120a, 130a, 120b, 130b ont également ici approximativement une même largeur L sensiblement constante. La largeur L est supérieure à la largeur I. Les segments 120a et 130a s'étendent latéralement au-delà du niveau des bords longitudinaux du segment 110a, de chaque côté de celui-ci. De même, les segments 120b et 130b s'étendent latéralement au-delà du niveau des bords longitudinaux du segment 110b, de chaque côté de celui-ci.

Comme le montrent les figures 4 à 10, à une extrémité longitudinale de l'ébauche 100, le segment 120a forme deux volet 121a, 122a qui sont situés en regard l'un de l'autre de part et d'autre d'une zone de séparation 123a et se raccordent au niveau de la première extrémité du segment 110a. De même, à l'autre extrémité longitudinale de l'ébauche 100, le segment 130b forme deux volets 131b, 132b qui sont situés en regard l'un de l'autre de part et d'autre d'une zone de séparation 133b et se raccordent au niveau de la deuxième extrémité du segment 110b. De chaque côté du segment 110a, les volets 121a et 122a se prolongent par des ailes 121'a, 122'a qui s'étendent sur une distance limitée le long des bords longitudinaux du segment 110a en étant séparées de ceux-ci. De même, de chaque côté du segment 130b, les volets 131b et 132b se prolongent par des ailes 131'b, 132'b qui s'étendent sur une distance limitée le long des bords longitudinaux du segment 130b en étant séparés de ceux-ci.

Dans la partie centrale de l'ébauche 100, le segment 130a forme aussi deux volets en regard 131a, 132a situés de part et d'autre d'une zone de séparation 133a et raccordés au niveau de la deuxième extrémité du segment 110a et le segment 120b forme deux volets en regard 121b, 122b situés de part et d'autre d'une zone de séparation 123b et raccordés au niveau de la première extrémité du segment 110b. Les séparations 123a, 133a, 123b et 133b entre les volets en regard peuvent être obtenues par des incisions pratiquées après tissage multi-couches ou, comme expliqué plus loin, par aménagement de zones de déliaison lors du tissage multi-couches.

Chacun des segments 110a et 110b présente sur toute sa longueur une zone de séparation, respectivement 112a, 112b, qui partage le segment en deux parties en regard, sur une partie médiane seulement, la zone de séparation se terminant à distance des bords longitudinaux des segments 110a ou 110b, Les zones de séparation 112a, 112b sont destinées à permettre la formation des passages longitudinaux 12a, 12b des aubes et elle se situent au même niveau que les zones de séparation entre volets auxquelles elles se raccordent. Les zones de séparation 112a, 112b peuvent être obtenues par des découpes pratiquées après tissage multi-couches ou, comme expliqué plus loin, par aménagement de zones de déliaison lors du tissage multi-couches.

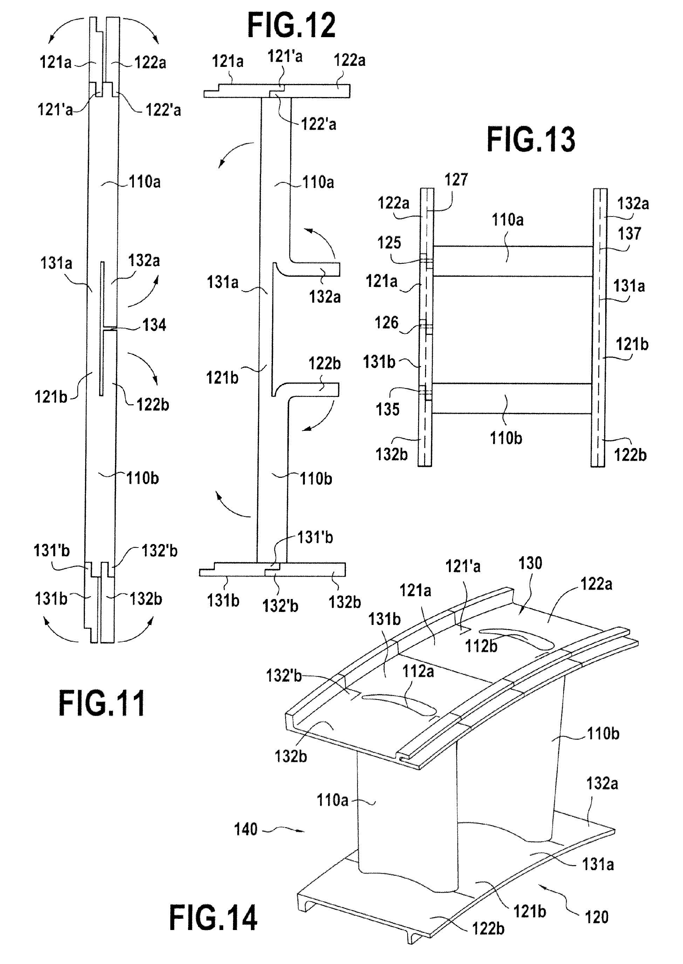

La formation de la préforme d'élément de distributeur à partir de l'ébauche 100 sera maintenant décrite en référence aux figures 11 à 15.

Une incision transversale 134 est pratiquée sur toute la largeur de l'ébauche 100 et une partie de son épaisseur pour séparer les extrémités des volets 132a, 122b (figure 11). En outre, les épaisseurs des ailes 121'a, 122'a, 131'b, 132'b sont réduites par enlèvement de matière pour permettre leur superposition lors du dépliage ultérieur de l'ébauche 100 sans former de sur-épaisseur notable par rapport à l'épaisseur des volets. Les épaisseurs des ailes peuvent être diminuées sensiblement de moitié, comme illustré, ou progressivement, en biseau. Des réductions d'épaisseurs similaires sont pratiquées aux extrémités des volets 121a et 131b. On notera que les volets 131a et 121b restent liées l'un à l'autre à leur extrémité commune.

Comme montré par les flèches de la figure 11, on fait pivoter les volets 121a, 122a de chaque côté du segment 110a, à la première extrémité de celui-ci, pour les amener sensiblement perpendiculairement au segment 110a et on fait pivoter les volets 131b et 132b de chaque côté du segment 110b, à la deuxième extrémité de celui-ci, pour les amener sensiblement perpendiculairement au segment 110b. Les ailes 121'a et 122'a viennent en recouvrement mutuel, de même que les ailes 131'b et 132'b. En outre, on fait pivoter le volet 132a par rapport au segment 110a, à la deuxième extrémité de celui-ci pour l'amener sensiblement perpendiculairement au segment 110a et on fait pivoter le volet 122b par rapport à la première extrémité du segment 110b pour l'amener sensiblement perpendiculairement au segment 110b. La forme de l'ébauche 100 est alors telle que montrée par la figure 12.

Les flèches de la figure 12 montre la poursuite du dépliage avec pivotement de l'ensemble formé par les volets 121a, 122a, le segment 110a et le volet 132a à la deuxième extrémité du segment 110a et pivotement de l'ensemble formé par les volets 131b et 132b, le segment 110b et le volet 122b à la première extrémité du segment 110b. Comme montré par la figure 13, les segments 110a et 110b sont ainsi amenés sensiblement parallèlement l'un à l'autre et les extrémités amincies des volets 121a et 131b viennent en recouvrement mutuel.

Pour faciliter la tenue de l'ébauche dépliée dans la forme montrée par la figure 13, les ailes en recouvrement mutuel 121'a et 122'a, de même que 131'b et 132'b, et les extrémités en recouvrement mutuel des volets 121a et 131b peuvent être reliées par exemple par des points de couture (125, 135 et 126). D'autres modes de liaison peuvent être utilisés, par exemple l'implantation de fils ou aiguilles.

Telle que montrée par la figure 13, l'ébauche dépliée a une forme voisine de celle de l'élément de distributeur à réaliser. La mise en forme de la préforme d'élément de distributeur est réalisée par conformation au moyen d'un outillage comprenant des éléments de conformation des préformes des secteurs de plate-forme interne et externe, des éléments de conformation de la géométrie extérieure des préformes des aubes et des éléments de conformation de leurs passages internes longitudinaux, ces derniers éléments de conformation pénétrant dans les zones de séparation 112a, 112b.

La figure 14 montre schématiquement la préforme 140 obtenue permettant l'obtention de l'élément de distributeur de la figure 2. La partie formant préforme 120 de la plate-forme interne est formée par le volet 132a, les volets 131a, 121b (qui sont restés liés l'un à l'autre à leur extrémité commune) et le volet 122b. La partie formant préforme 130 de la plate-forme externe est formée par les volets 122a, 121a, 131b et 132b. Les parties de préformes des aubes sont formées par les segments 110a, 110b. Pour obtenir, aux extrémités des préformes de plate-forme, des parties ayant une forme voisine de celle de becquets, des incisions 127, 137 peuvent être pratiquées comme montré sur la figure 13.

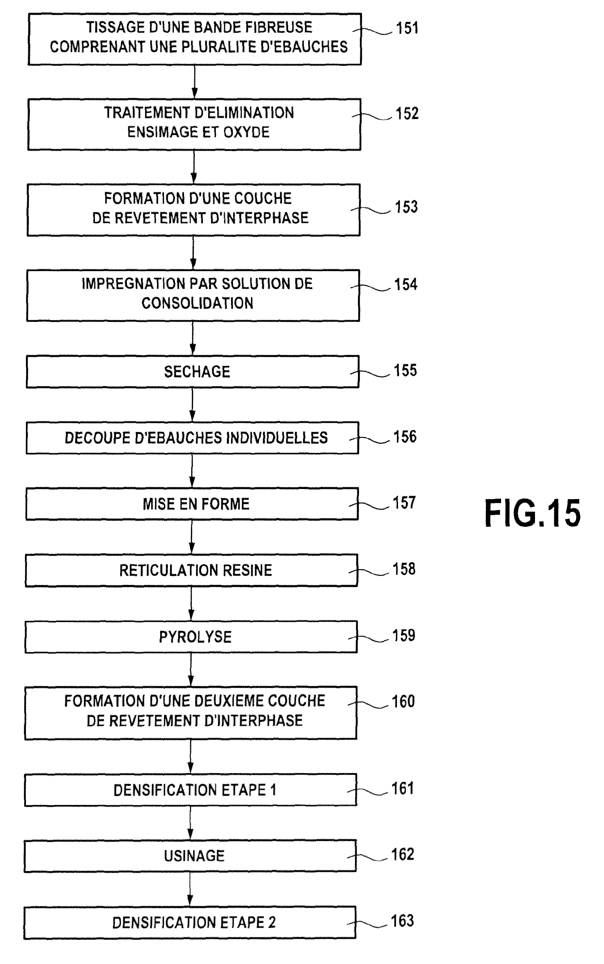

Des étapes successives d'un procédé de fabrication de l'élément de distributeur de la figure 2 en CMC sont résumées sur la figure 15.

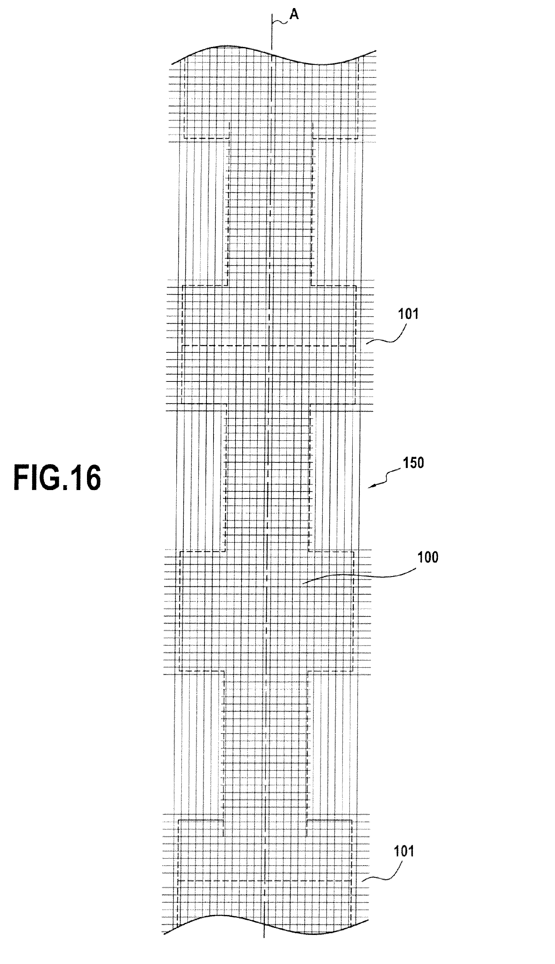

A l'étape 151, une bande fibreuse 150 telle que celle de la figure 16 est tissée par tissage tridimensionnel (3D) ou tissage multi-couches comprenant une rangée d'ébauches fibreuses 100 consécutives. Dans l'exemple illustré, les ébauches 100 ont leur direction longitudinale A orientée en sens chaîne, c'est-à-dire dans la direction longitudinale de la bande 150. En variante, elles pourraient être orientées en sens trame, dans la direction transversale de la bande 150. En outre, plusieurs rangées parallèles d'ébauches peuvent être tissées dans la largeur de la bande 150.

La bande 150 est tissée avec des fils en fibres céramiques, par exemple des fils en fibres à base de SiC tels que par exemple fournis par la société japonaise Nippon Carbon sous la dénomination "Nicalon". L'utilisation de fils formés de fibres de carbone est toutefois envisageable.

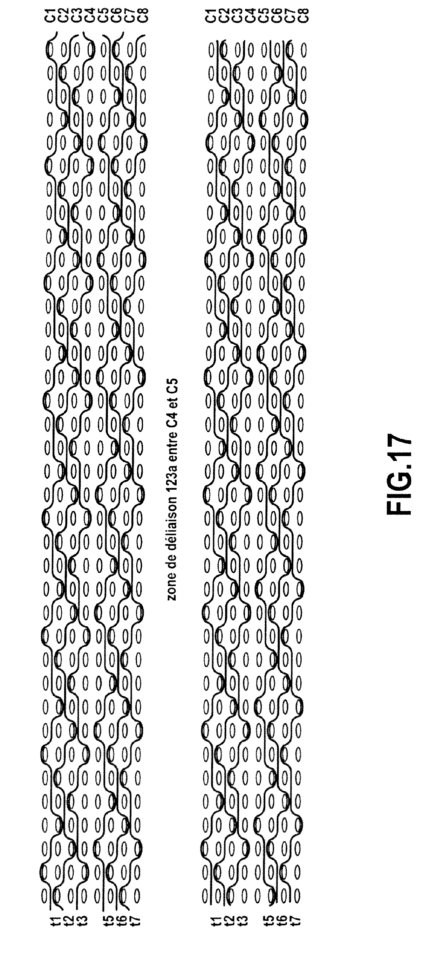

Les figures 17, 18, 19 montrent, en coupe chaîne et à échelle agrandie, deux plans consécutifs d'armure de tissage pour les parties de l'ébauche 100 correspondant aux coupes transversales des figures 7, 8 et 9, respectivement.

La bande 150 comprend un ensemble de couches de fils de chaîne, le nombre de couches étant ici par exemple égal à 8 (couches C₁ à C₈), les fils de chaîne étant liés par des fils de trame. Dans l'exemple illustré, le tissage est un tissage multi-couches réalisé avec une armure de type satin, ou multi-satin. D'autres types de tissage 3D ou multi-couches pourront être utilisés, par exemple un tissage multi-couches à armure multi-toile ou un tissage à armure "interlock". Par tissage "interlock", on entend ici un tissage avec une armure dans laquelle chaque couche de fils de trame lie plusieurs couches de fils de chaîne avec tous les fils d'une même colonne de trame ayant le même mouvement dans le plan de l'armure. Différents modes de tissage 3D ou multi-couches sont notamment décrits dans le document WO 2006/136755.

La figure 17 montre, au niveau du segment 120a d'une ébauche 100, des fils de trame t₁ à t₃ qui lient ensemble les couches de fils de chaîne C₁ à C₄ et des fils de trame t₅ à t₇ qui lient ensemble les couches de fils de chaîne C₅ à C₈, les couches C₄ et C₅ n'étant pas liées entre elles pour ménager une zone de déliaison formant la séparation 123a entre les volets 121a et 122a. Il est procédé de même aux niveaux des segments 120b, 130a et 130b de l'ébauche 100.

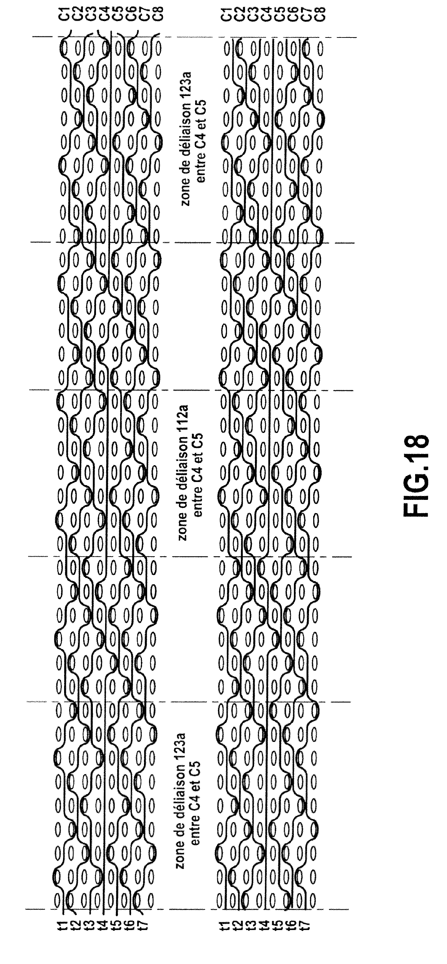

La figure 18 montre, au niveau de la partie voisine de la première extrémité du segment 110a des fils de trame t₁ à t₃ qui lient ensemble les couches de fils de chaîne C₁ à C₄ et des fils de trame t₅ à t₇ qui lient ensemble les couches de fils de chaîne C₅ à C₈. Des zones de déliaison sont aménagées entre les couches C₄ et C₅ de fils de chaîne pour former les séparations 123a entre les ailes 121'a, 122'a des volets 121a, 122a et pour former la zone de séparation 112a dans la partie centrale du segment 110a. Les couches C₄ et C₅ sont liées par fils de trame t₄ au niveau des parties latérales du segment 110a. Il est procédé de même au niveau de la partie voisine de la deuxième extrémité du segment 110b.

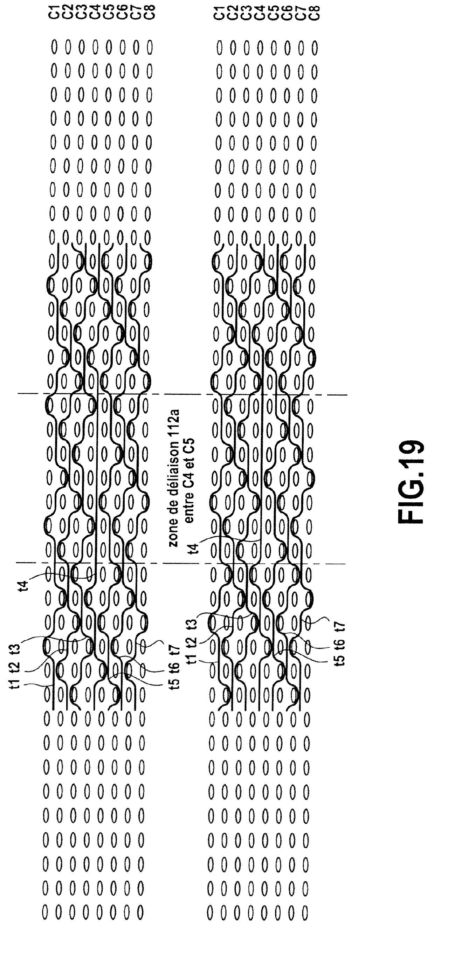

La figure 19 montre, au niveau du reste du segment 110a l'aménagement d'une zone centrale de déliaison entre les couches C₄ et C₅ de fils de chaîne pour former la zone de séparation 112a dans la partie centrale du segment 110a, comme dans la figure 18. Les couches C₄ et C₅ sont liées au niveau des parties latérales du segment 110a, comme dans la figure 18. Il est procédé de même pour le segment 110b. Les fils de chaîne qui s'étendent de chaque côté des segments 110a, 110b pour la réalisation des segments 120a, 130a, 120b, 130b ne sont pas tissés au niveau des segments 110a, 110b.

Dans la bande 150, des zones de sur-longueur 101 (figure 16) sont aménagées entre ébauches consécutives pour disposer de marges pour la découpe.

A l'étape 152, la bande est de préférence traitée pour éliminer l'ensimage présent sur les fibres, par exemple par bref traitement thermique, et pour éliminer la présence d'oxyde à la surface des fibres, par exemple par traitement à l'acide fluorhydrique.

A l'étape 153, une couche mince de revêtement d'interphase est formée sur les fibres de la bande fibreuse par infiltration chimique en phase gazeuse ou CVI ("Chemical Vapor Infiltration"). Le matériau du revêtement d'interphase est par exemple du carbone pyrolytique ou pyrocarbone (PyC), du nitrure de bore (BN) ou du carbone dopé au bore (BC avec par exemple de 5%at à 20%at de B, le complément étant C). La couche mince de revêtement d'interphase est de préférence de faible épaisseur, par exemple au plus égale à 100 nanomètres, voire au plus égale à 50 nanomètres, de manière à conserver une bonne capacité de déformation des ébauches fibreuses. De préférence, l'épaisseur est au moins égale à 10 nanomètres.

A l'étape 154, la bande fibreuse avec les fibres revêtues d'une mince couche de revêtement d'interphase est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane, polysiloxane ou polycarbosilane précurseurs de SiCN, SiCO et SiC.

Après séchage par élimination du solvant éventuel de la résine (étape 155), les ébauches fibreuses individuelles 100 sont découpées (étape 156). Lors de la découpe, les parties de fils de chaîne qui s'étendent entre les segments 120a et 130a, de part et d'autre du segment 110a, sont éliminées de même que les parties de fils de chaîne qui s'étendent entre les segments 120b et 130b, de part et d'autre des segments 110b. En outre, des incisions sont pratiquées pour séparer les ailes 121'a, 122'a du segment 110a et pour séparer les ailes 131'b, 132'b du segment 110b.

A l'étape 157, une ébauche fibreuse ainsi découpée est préparée, dépliée et mise en forme au moyen d'un outillage de conformation, par exemple en graphite afin d'obtenir la préforme 150 comme décrit plus haut en référence aux figures 11 à 14.

Ensuite, la résine est réticulée (étape 158) et la résine réticulée est pyrolysée (étape 159). La réticulation et la pyrolyse peuvent être enchaînées par élévation progressive de la température dans l'outillage de conformation.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Des étapes d'élimination d'ensimage, de traitement acide et de formation de revêtement d'interphase pour un substrat en fibres SiC sont connues. On pourra se référer au document US 5 071 679.

Une deuxième couche d'interphase peut être formée par CVI (étape 160) si nécessaire pour obtenir globalement une interphase fibres-matrice ayant une épaisseur suffisante pour assurer une fonction de défragilisation du matériau composite. La deuxième couche d'interphase peut être en matériau choisi parmi PyC, BN, BC, pas nécessairement le même que celui de la première couche d'interphase. L'épaisseur de la deuxième couche d'interphase est de préférence au moins égale à 100 nanomètres.

Une densification par une matrice céramique de la préforme consolidée est ensuite réalisée. On peut réaliser cette densification par CVI auquel cas la formation de la deuxième couche d'interphase et la densification par la matrice céramique peuvent être enchaînées dans un même four.

La densification par CVI d'une préforme par une matrice céramique, notamment une matrice SiC, est bien connue. Une phase gazeuse réactionnelle contenant du méthyltrichlorosilane (MTS) et du gaz hydrogène (H₂) peut être utilisée. La préforme consolidée est placée dans l'enceinte, sans l'aide d'outillage de maintien de sa forme et la phase gazeuse est introduite dans l'enceinte. Dans des conditions contrôlées notamment de température et de pression, la phase gazeuse diffuse dans la porosité de la préforme pour former le dépôt de matrice SiC par réaction entre ses constituants.

Bien entendu, selon la nature du matériau composite souhaité, le procédé peut être mis en oeuvre à partir d'une bande fibreuse en fibres autres qu'en céramique, par exemple en fibres de carbone. Le traitement acide d'élimination de couche d'oxyde est alors omis.

De même, la densification par CVI de la préforme consolidée peut être réalisée par une matrice autre que SiC, notamment une matrice de carbone ou une matrice auto-cicatrisante, des exemples de phases de matrice auto-cicatrisantes étant un système ternaire Si-B-C ou du carbure de bore B₄C. On pourra se référer aux documents US 5 246 736 et US 5 965 266 qui décrivent l'obtention par CVI de telles matrices auto-cicatrisantes.

La densification peut être réalisée en deux étapes successives (étapes 161 et 163) séparées par une étape 162 d'usinage aux dimensions désirées de la pièce à fabriquer. La deuxième étape de densification permet non seulement de compléter la densification à coeur du matériau composite mais aussi de former un revêtement de surface sur les fibres éventuellement mises à nu pendant l'usinage.

On notera qu'un pré-usinage, ou détourage, peut être réalisé entre les étapes 158 et 159, c'est-à-dire après réticulation et avant pyrolyse de la résine.

En variante, après tissage de la bande fibreuse 150 et traitement d'élimination d'ensimage et d'oxyde, des ébauches fibreuses individuelles 100 sont découpées dans la bande fibreuse, puis chaque ébauche fibreuse individuelle est dépliée, mise en forme par un outillage de conformation dans lequel elle est maintenue pour former par CVI le revêtement d'interphase de défragilisation.

La préforme étant toujours maintenue en forme dans l'outillage de conformation, une consolidation de la préforme par densification partielle est réalisée, la consolidation étant réalisée par formation de dépôt céramique sur les fibres par CVI.

La formation du revêtement d'interphase par CVI et la consolidation par dépôt céramique par CVI peuvent être enchaînées dans un même four CVI.

L'outillage de conformation est de préférence en graphite et présente des trous facilitant le passage de la phase gazeuse réactionnelle donnant le dépôt d'interphase et le dépôt céramique par CVI.

Lorsque la consolidation est suffisante pour que la préforme puisse être manipulée tout en conservant sa forme sans assistance d'outillage de maintien, la préforme consolidée est extraite du conformateur et la densification par une matrice céramique par CVI est réalisée.

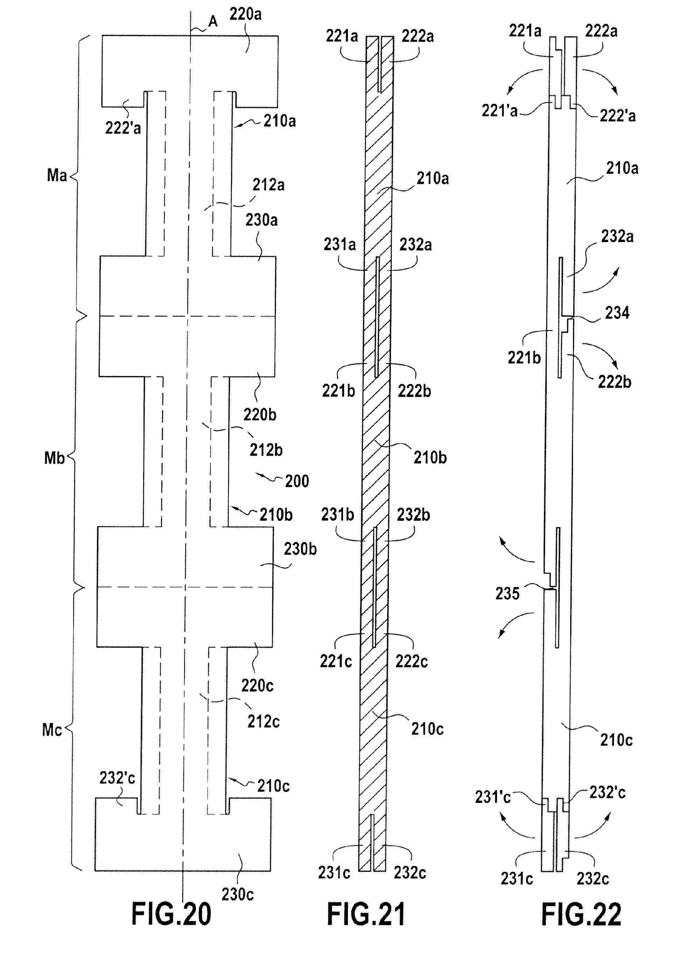

Les figures 20 à 22 montrent une ébauche fibreuse 200 à partir de laquelle peut être obtenue une préforme fibreuse permettant de réaliser un élément de distributeur de turbine en une seule pièce en CMC avec un secteur de plate-forme interne, un secteur de plate-forme externe et trois aubes s'étendant entre les secteurs de plate-forme et reliées à ceux-ci.

Dans la direction longitudinale A, l'ébauche 200 comprend trois motifs similaires Ma, Mb, Mc semblables aux motifs Ma et Mb de l'ébauche 100 décrite plus haut et montrés séparés par des lignes en pointillés.

Ainsi, le motif Ma inclut un premier segment 210a destiné à former une partie de préforme pour une première aube, un deuxième segment 220a prolongeant le premier segment 210a à une première extrémité longitudinale de celui-ci et formant deux volets 221a, 222a situés en regard l'un de l'autre, et un troisième segment 230a prolongeant le segment 210a à son autre extrémité longitudinale et formant deux volets 231a, 232a situés en regard l'un de l'autre.

Le motif Mb inclut un premier segment 210b destiné à former une partie de préforme pour une deuxième aube, un deuxième segment 220b prolongeant le premier segment 210b à une première extrémité longitudinale de celui-ci et formant deux volets 221b, 222b situés en regard l'un de l'autre, et un troisième segment 230b prolongeant le segment 210b à son autre extrémité longitudinale et formant deux volets 231b, 232b situés en regard l'un de l'autre.

Le motif Mc inclut un premier segment 210c destiné à former une partie de préforme pour une troisième aube, un deuxième segment 220c prolongeant le premier segment 210c à une première extrémité longitudinale de celui-ci et formant deux volets 221c, 222c situés en regard l'un de l'autre, et un troisième segment 230c prolongeant le segment 210c à son autre extrémité longitudinale et formant deux volets 231c, 232C situés en regard l'un de l'autre.

Les segments 230a et 220b sont dans le prolongement et la continuité l'un de l'autre, de même que les segments 230b et 220c. Dans chaque motif, le deuxième et le troisième segments ont une largeur supérieure à celle du premier segment et s'étendent au-delà du niveau des bords longitudinaux de ce dernier. De chaque côté du segment 210a, les volets 221a, 222a se prolongent par des ailes 221'a, 222'a, de la même façon que les volets 121a, 122a de l'ébauche 100. De même, de chaque côté du segment 230c, les volets 231c, 232c se prolongent par des ailes 231'c, 232'c de la même façon que les volets 131b, 132b de l'ébauche 100.

Les segments 210a, 210b, 210c ont une même largeur sensiblement constante. On pourra toutefois leur conférer une largeur variable lorsque la dimension transversale des aubes de l'élément de distributeur à fabriquer varie sensiblement. De la même manière que les segments 110a, 110b, chacun des segments 210a, 210b, 210c présente sur toute sa longueur une zone de séparation, respectivement 212a, 212b, 212c, formée dans une partie médiane seulement. Ces zones de séparation se terminent à distance des bords longitudinaux des segments 210a, 210b, 210c et se raccordent aux zones de séparation entre volets.

De la même manière que l'ébauche 100, l'ébauche 200 est découpée dans une bande tissée continue contenant une ou plusieurs rangées d'ébauches. Le tissage est de type 3D ou multi-couches. Les zones de séparation entre les volets des segments 220a, 230a, 220b, 230b, 220c, 230c et dans les parties médianes des segments 210a, 210b, 210c peuvent être formées en aménageant des zones de déliaison lors du tissage, comme décrit plus haut, ou en pratiquant des découpes après tissage.

Comme montré par la figure 22, l'ébauche 200 est préparée pour dépliage en pratiquant des incisions 234 et 235 pour séparer les extrémités des volets 232a, 222b et pour séparer les extrémités des volets 231b et 221c. Des réductions d'épaisseurs sont en outre pratiquées dans les ailes 221'a, 222'a, 231'c, 232'c et dans des parties d'extrémité des volets 221a, 231b et 231c pour éviter des sur-épaisseurs lors de leur superposition ultérieure au dépliage de l'ébauche, de la même manière que pour l'ébauche 100. Les volets 231a et 221b restent liés à leurs extrémités, de même que les volets 232b et 222c.

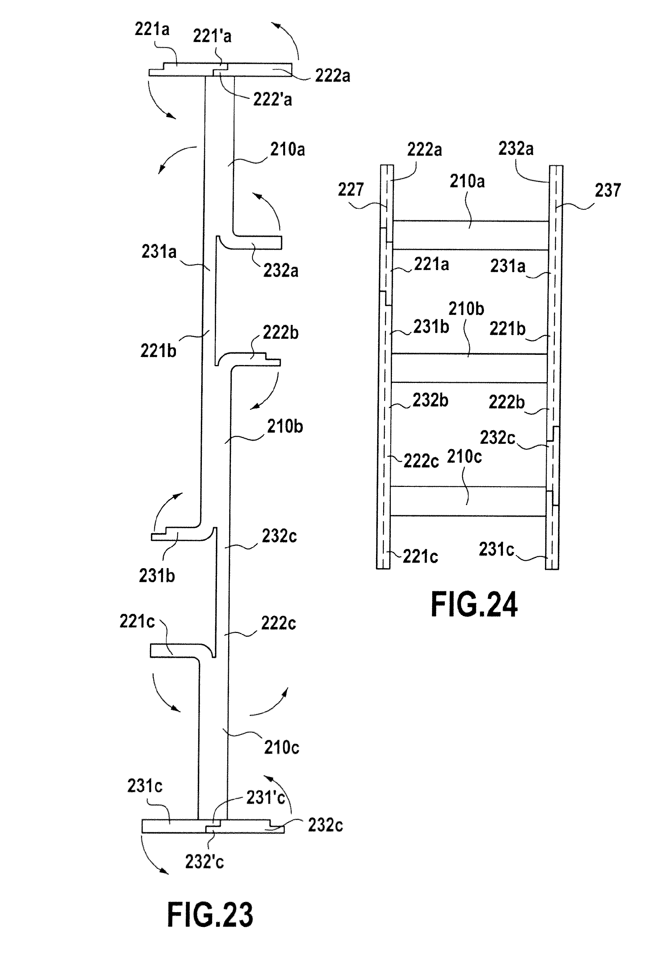

La figure 23 montre l'ébauche 200 partiellement dépliée après pivotement des volets 221a, 222a, 232a, 222b, 231b, 221c, 231c, 232c comme indiqué par les flèches de la figure 22, les volets venant sensiblement perpendiculairement à la direction longitudinale A.

La figure 24 montre l'ébauche 200 à l'état complètement déplié après pivotement de l'ensemble formé par les volets 221a, 222a, le segment 210a et le volet 232a, de l'ensemble formé par le volet 231b, le segment 210b et le volet 222b et de l'ensemble formé par les volets 231c, 232c, le segment 210c et le volet 221a, selon les flèches de la figure 23.

Les ailes et parties d'extrémité de volets en recouvrement mutuel peuvent être liées par couture ou par implantation de fils ou d'aiguilles.

L'ébauche dépliée est mise en forme au moyen d'un outillage de conformation comprenant des éléments de conformation des préformes de secteurs de plates-formes interne et externe, des éléments de conformation de la géométrie extérieure des préformes des aubes et des éléments de conformation de leurs passages internes longitudinaux, ces derniers éléments de conformation pénétrant dans les zones de séparation 212a, 212b et 212c.

On peut ainsi obtenir une préforme d'élément de distributeur dans lequel : la partie de préforme de plate-forme interne est formée par le volet 232a, les volets 231a et 221b, le volet 222b, le volet 232c et le volet 231c, la partie de préforme de plate-forme externe est formée par le volet 222a, le volet 221a, le volet 231b, les volets 232b et 222c et le volet 221c, et les parties de préformes des aubes sont formées par les segments 210a, 210b et 210c. Des incisions 227, 237 peuvent être pratiquées pour obtenir des formes de becquets à une extrémité des préformes de plates-formes.

Le processus complet de fabrication de l'élément de distributeur en CMC peut être conforme à celui décrit en référence à la figure 15.

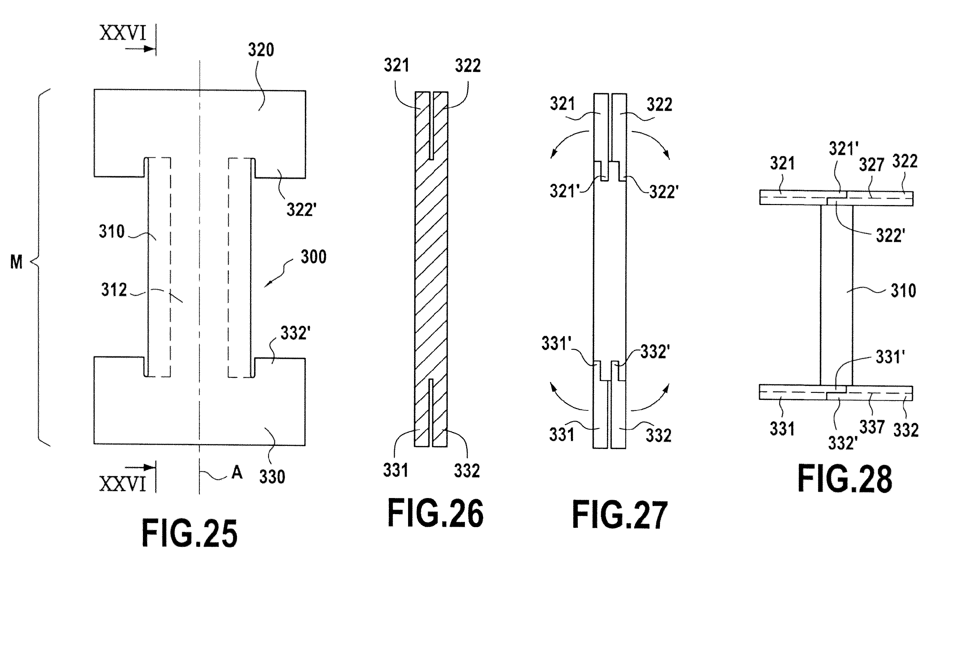

Les figures 25 à 27 montrent une ébauche fibreuse 300 à partir de laquelle peut être obtenue une préforme fibreuse permettant de réaliser un élément de distributeur de turbine en une seule pièce en CMC avec un secteur de plate-forme interne, un secteur de plate-forme externe et une aube s'étendant entre les secteurs de plate-forme et reliée à ceux-ci.

Dans la direction longitudinale A, l'ébauche 300 comprend un motif M qui inclut : un premier segment 310 destiné à former une partie de préforme de l'aube du distributeur de turbine, un deuxième segment 320 prolongeant le premier segment 310 à une extrémité longitudinale de celui-ci formant deux volets 321, 322 situés en regard l'un de l'autre, et un troisième segment 330 prolongeant le segment 310 à son autre extrémité longitudinale et formant deux volets 331, 332 situés en regard l'un de l'autre.

Les segments 320 et 330 ont une largeur supérieure à celle du segment 310 et s'étendent au-delà du niveau des bords longitudinaux de celui-ci. De chaque côté du segment 310, les volets 321, 322 se prolongent par des ailes 321', 322', de la même façon que les volets 121a, 122a de l'ébauche 100, tandis que les volets 331, 332 se prolongent par des ailes 331', 332' de la même façon que les volets 131b, 132b de l'ébauche 100.

Le segment 310 a une largeur sensiblement constante. On pourra toutefois lui conférer une largeur variable pour refléter une dimension transversale évolutive de l'aube du distributeur de turbine lorsque cette dimension transversale varie de façon significative. Le segment 310 présente sur toute sa largeur une zone de séparation 312 formée dans une partie médiane seulement, la zone de séparation se terminant à distance des bords longitudinaux du segment 310.

De la même manière que l'ébauche 100, l'ébauche 300 est découpée dans une bande tissée continue contenant une ou plusieurs rangées d'ébauches. Le tissage est de type 3D ou multi-couches. Les zones de séparation entre volets 321, 322, entre volets 331, 332 et dans le segment 310 peuvent être formées en aménageant des zones de déliaison lors du tissage, comme décrit plus haut, ou en pratiquant des découpes après tissage.

Comme montré par la figure 27, l'ébauche 300 est préparée pour dépliage en pratiquant des réductions d'épaisseurs dans les ailes 321', 322', 331', 332' pour éviter des sur-épaisseurs lors de leur superposition ultérieure au dépliage de l'ébauche.

La figure 28 montre l'ébauche 300 dépliée par pivotement des volets 321, 322, 331, 332 comme indiqué par les flèches de la figure 27, les volets venant sensiblement perpendiculairement à la direction longitudinale A. Les ailes 321', 322' en recouvrement mutuel peuvent être liées l'une à l'autre par couture ou par implantation de fils ou d'aiguilles, de même que les ailes 331', 332'.

L'ébauche dépliée est mise en forme au moyen d'un outillage de conformation comprenant des éléments de conformation des préformes secteurs de plate-forme interne et externe, des éléments de conformation de la géométrie extérieure de la préforme d'aube et un élément de conformation du passage longitudinal de la préforme d'aube, ce dernier élément de conformation pénétrant dans la zone de séparation 312.

On obtient ainsi une préforme d'élément de distributeur dans lequel : la partie de la préforme de plate-forme interne est formée par les volets 331 et 332, la partie de préforme de plate-forme externe est formée par les volets 321 et 322 et la partie de préforme d'aube est formée par le segment 310. Des incisions 327, 337 peuvent être pratiquées pour obtenir des formes de becquets à une extrémité des préformes de plates-formes.

Le processus complet de fabrication de l'élément de distributeur en CMC peut être conforme à celui décrit en référence à la figure 15.

Dans ce qui précède, on a décrit des modes de réalisation d'éléments de distributeur en CMC à une, deux ou trois aubes. Bien entendu, le nombre d'aubes pourra être supérieur en formant des ébauches fibreuses avec le nombre voulu de motifs consécutifs tels que des motifs Ma, Mb, Mc.

En outre, dans ce qui précède, on a envisagé la réalisation d'éléments de distributeur avec une ou plusieurs aubes creuses présentant un passage interne longitudinal. L'invention est toutefois applicable aussi à la réalisation d'éléments de distributeur avec une ou plusieurs aubes pleines. Dans ce dernier cas, lors du tissage de l'ébauche fibreuse, il n'est pas aménagé de zone de déliaison dans la ou chaque partie destinée à constituer une préforme d'aube.

On a envisagé le cas où l'élément de distributeur à fabriquer, tel que celui de la figure 2, a des secteurs de plate-forme interne et externe qui s'étendent sensiblement parallèlement l'un à l'autre.

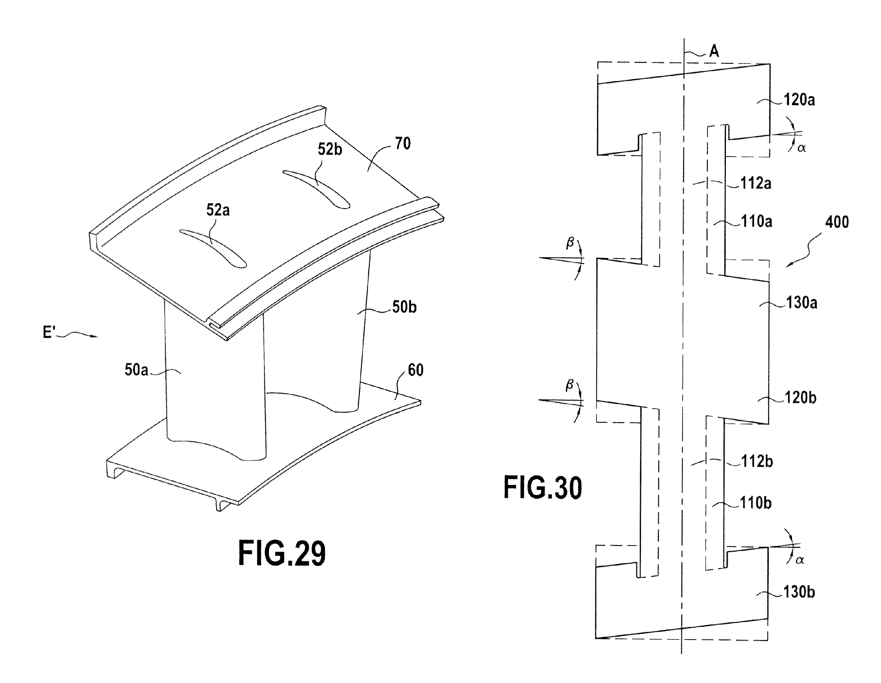

L'invention est toutefois également applicable au cas où, comme montré par la figure 29, l'élément de distributeur E' en CMC à fabriquer présente des secteurs de plate-forme interne 60 et de plate-forme externe 70 non parallèles entre eux. Dans cet exemple, comme dans le cas de la figure 2, l'élément de distributeur comprend deux aubes 50a, 50b qui s'étendent entre les secteurs de plate-forme 60, 70 en étant reliés à ceux-ci et qui présentent des passages longitudinaux internes 52a, 52b sur toute leur longueur. Les secteurs de plate-forme s'étendent de part et d'autre des zones de raccordement avec les aubes.

Une préforme fibreuse pour la réalisation de l'élément de distributeur E' peut être obtenue par dépliage d'une ébauche fibreuse tissée par tissage 3D ou multi-couches telle que l'ébauche 400 de la figure 30. Par souci de simplicité, on a repris pour les éléments de l'ébauche 400 les mêmes références que celles des éléments de l'ébauche 100 de la figure 3 ayant mêmes fonctions.

L'ébauche 400 se distingue de l'ébauche 100 en ce que le raccordement entre le premier segment d'un motif et l'un au moins du deuxième et troisième segment du même motif s'étend en formant un angle non nul par rapport à la normale à la direction longitudinale A.

Ainsi, dans le cas de la figure 30, le segment 120a se raccorde au segment 110a en formant un angle α non nul par rapport à la normale à la direction A et le segment 130a se raccorde au segment 120a en formant un angle β non nul par rapport à la normale à la direction A. Les angles α et β sont ici de signes opposés. De façon similaire, le segment 130b se raccorde au segment 110b en formant un angle sensiblement égal à α et le segment 120b se raccorde au segment 110b en formant un angle sensiblement égal à β.

Le dépliage de l'ébauche 400 est réalisé de la même manière que le dépliage de l'ébauche 100.

L'ébauche 400 est découpée dans une bande tissée continue, comme l'ébauche 100. On peut réaliser un tissage 3D ou multicouches de la partie délimitée par le contour montré en tirets sur la figure 30, et procéder ensuite à des découpes pour retrouver le profil de l'ébauche 400. On pourra aussi, lors du tissage, réaliser un tissage en biais au niveau des raccordements entre, d'une part, le premier segment d'un motif et, d'autre part, chacun des deuxième et troisième segment du même motif.

Bien entendu, un élément de distributeur en CMC avec secteurs de plate-forme interne et de plate-forme externe non parallèles entre eux peut être réalisé avec un nombre d'aubes différent de deux.

## Revendications

1. Elément de distributeur de turbine en en une seule pièce en matériau composite comprenant un renfort fibreux densifié par une matrice au moins partiellement en céramique, l'élément de distributeur comportant un secteur (20 ; 60) de plate-forme interne annulaire, un secteur (30 ; 70) de plate-forme externe annulaire et au moins une aube (10a, 10b ; 50a, 50b) s'étendant entre les secteurs de plate-forme et reliée à ceux-ci, les secteurs de plate-forme s'étendant de part et d'autre de la zone de raccordement avec la ou chaque aube,
**caractérisé en ce que** le renfort fibreux comprend une structure fibreuse tissée par tissage tridimensionnel ou multi-couches qui présente une continuité dans tout le volume de l'élément de distributeur et sur toute la périphérie de la ou chaque aube.

2. Elément de distributeur selon la revendication 1, **caractérisé en ce que** la ou chaque aube présente un passage longitudinal interne (12a, 12b) s'étendant sur toute la longueur de l'aube et s'ouvrant au niveau des secteurs de plate-forme.

3. Elément de distributeur selon la revendication 1, **caractérisé en ce que** la ou chaque aube est pleine.

4. Elément de distributeur de turbine selon l'une quelconque des revendications 1 à 3, **caractérisé en ce qu'**il comprend au moins deux aubes (10a, 10b ; 50a, 50b) s'étendant entre les secteurs de plate-forme et **en ce que** la structure fibreuse comprend des fils qui suivent un trajet continu s'étendant successivement le long d'une partie d'un ou premier secteur de plate-forme, le long d'une première aube, le long d'une partie de l'autre ou second secteur de plate-forme, le long d'une deuxième aube puis le long d'une partie du premier secteur de plate-forme.

5. Procédé de fabrication d'un élément de distributeur de turbine en une seule pièce en matériau composite comprenant un renfort fibreux densifié par une matrice au moins partiellement en céramique, l'élément de distributeur comportant un secteur (20 ; 60) de plate-forme interne annulaire, un secteur (30 ; 70) de plate-forme externe annulaire et au moins une aube (10a, 10b ; 50a, 50b) s'étendant entre les secteurs de plate-forme et reliée à ceux-ci, le procédé comportant la réalisation d'une ébauche fibreuse par tissage tridimensionnel ou multi-couches, la mise en forme de l'ébauche fibreuse pour obtenir une préforme fibreuse de l'élément de distributeur et la densification de la préforme par une matrice au moins partiellement en céramique, **caractérisé en ce que** :
- l'on réalise d'une ébauche fibreuse (100 ; 200 ; 300 ; 400) en une seule pièce tissée par tissage tridimensionnel ou multi-couches comportant, dans une direction longitudinale, au moins un motif incluant un premier segment (110a, 110b, 210a, 210b, 210c ; 310) formant une ébauche de préforme d'aube, un deuxième segment (120a, 120b ; 220a, 220b, 220c ; 320) prolongeant le premier segment à une extrémité longitudinale de celui-ci en formant deux volets (121a-122a, 121b-122b ; 221a-222a ; 221b-222b ; 221c, 222c ; 321-322) situés face à face, et un troisième segment (130a, 130b ; 230a, 230b, 230c ; 330) prolongeant le premier segment à l'autre extrémité de celui-ci en formant deux volets (131a-132a, 131b-132b ; 231a-232a, 231b-232b, 231c-232c ; 331-332) situés face à face,
- l'ébauche est dépliée avec pivotement relatif entre les volets du deuxième segment et le premier segment, de part et d'autre de celui-ci à sa première extrémité, pour amener les volets du deuxième segment sensiblement perpendiculairement au premier segment, et avec pivotement relatif entre les volets du troisième segment et le premier segment, de part et d'autre de celui-ci à sa deuxième extrémité, pour amener les volets du troisième segment sensiblement perpendiculairement au premier segment, et
- l'ébauche dépliée est mise en forme pour obtenir une préforme fibreuse (140) de l'élément de distributeur avec au moins une partie formant préforme d'aube obtenue par mise en forme d'un premier segment et des parties formant préformes de secteurs de plate-forme obtenues à partir des volets,
- de sorte qu'après densification, un élément de distributeur de turbine en une seule pièce est obtenu avec un renfort fibreux comprenant la préforme fibreuse qui présente une continuité dans tout le volume de l'élément de distributeur et sur toute la périphérie de la ou chaque aube.

6. Procédé selon la revendication 5, **caractérisé en ce que** l'ébauche est réalisée avec un deuxième segment et un troisième segment ayant des largeurs supérieures à celle du premier segment en s'étendant latéralement au-delà du niveau des bords latéraux du premier segment.

7. Procédé selon la revendication 6, **caractérisé en ce que**, dans l'un au moins des deuxième et troisième segment, les deux volets sont formés chacun avec des ailes (121'a-122'a, 131'b-132'b ; 221'a-222'a, 231'c-232'c ; 321'-322', 331'-332') qui, à l'état non déplié, prolongent les parties des volets faisant saillie latéralement au-delà du niveau des bords longitudinaux du premier segment en s'étendant le long de ces bords tout en étant séparés de ceux-ci, et les ailes d'un volet sont amenées en recouvrement mutuel avec les ailes de l'autre volet lors du dépliage de l'ébauche.

8. Procédé selon la revendication 7, **caractérisé en ce que** les ailes en recouvrement mutuel sont liées l'une à l'autre.

9. Procédé selon l'une quelconque des revendications 5 à 8, **caractérisé en ce que** l'ébauche fibreuse est réalisée en une seule pièce avec répétition dudit motif, le troisième segment (130a ; 230a, 230b) d'un premier motif et le deuxième segment (120b ; 220b, 220c) d'un deuxième motif consécutif étant dans le prolongement et la continuité l'un de l'autre et, lors du dépliage de l'ébauche, on fait pivoter dans un sens le premier segment (110a ; 210a) du premier motif par rapport au troisième segment (130a ; 230a) du premier motif et on fait pivoter en sens opposé le premier segment (110b ; 210b) du deuxième motif par rapport au deuxième segment (120a ; 220a) du deuxième motif afin d'amener les premiers segments du premier et du deuxième motif sensiblement parallèlement l'un à l'autre.

10. Procédé selon la revendication 9, **caractérisé en ce que** lors du dépliage de l'ébauche, un volet (121a ; 221a, 222b) du deuxième segment du premier motif et un volet (131b ; 231b, 232c) du troisième segment d'un motif consécutif sont amenés dans le prolongement l'un de l'autre pour pouvoir former une partie de préforme de secteur de plate-forme.

11. Procédé selon la revendication 10, **caractérisé en ce que**, après dépliage de l'ébauche, les volets amenés dans le prolongement l'un de l'autre sont liés l'un à l'autre.

12. Procédé selon l'une quelconque des revendications 5 à 11, **caractérisé en ce que**, lors du tissage multi-couches de l'ébauche, des zones de déliaison (123a, 133a, 123b, 133b) entre deux couches sont aménagées pour former les séparations entre les deux volets d'un deuxième segment et entre les deux volets d'un troisième segment.

13. Procédé selon l'une quelconque des revendications 5 à 12, **caractérisé en ce que**, lors du tissage multi-couches de l'ébauche, une zone de déliaison (112a, 112b ; 212a, 212b, 212c ; 312) entre deux couches est aménagée tout le long du premier segment, la zone de déliaison s'étendant sur une partie seulement de la largeur du premier segment, à distance des bords longitudinaux de celui-ci, de manière, après mise en forme, à former une préforme fibreuse d'aube avec un passage interne s'étendant sur toute la longueur de la préforme.

14. Distributeur de turbine comprenant une pluralité d'éléments de distributeur juxtaposés, chaque élément de distributeur étant conforme à l'une quelconque des revendications 1 à 4 ou obtenu par un procédé conforme à l'une quelconque des revendications 5 à 13.

15. Turbine à gaz munie d'un distributeur de turbine selon la revendication 14.

## Patentansprüche

1. Einstückiges Turbinenleitradelement aus Verbundwerkstoff, umfassend eine Faserverstärkung, die durch eine wenigstens teilweise keramische Matrix verdichtet ist, wobei das Leitradelement ein Segment (20; 60) einer ringförmigen Innenplattform, ein Segment (30; 70) einer ringförmigen Außenplattform sowie wenigstens eine Schaufel (10a, 10b; 50a, 50b), die sich zwischen den Plattformsegmenten erstreckt und mit diesen verbunden ist, umfasst, wobei die Plattformsegmente sich auf beiden Seiten des Verbindungsbereichs mit der oder jeder Schaufel erstrecken,
**dadurch gekennzeichnet, dass** die Faserverstärkung eine durch dreidimensionales oder Mehrlagen-Weben gewebte Faserstruktur umfasst, die im gesamten Volumen des Leitradelements und über den gesamten Umfang der oder jeder Schaufel eine Kontinuität aufweist.

2. Leitradelement nach Anspruch 1, **dadurch gekennzeichnet, dass** die oder jede Schaufel einen inneren Längsdurchgang (12a, 12b) aufweist, der sich über die gesamte Länge der Schaufel erstreckt und sich im Bereich der Plattformsegmente öffnet.

3. Leitradelement nach Anspruch 1, **dadurch gekennzeichnet, dass** die oder jede Schaufel massiv ist.

4. Turbinenleitradelement nach einem der Ansprüche 1 bis 3, **dadurch gekennzeichnet, dass** es wenigstens zwei Schaufeln (10a, 10b; 50a, 50b), die sich zwischen den Plattformsegmenten erstrecken, umfasst und dass die Faserstruktur Fäden umfasst, die einer durchgehenden Strecke folgen, welche nacheinander entlang eines Teils eines oder ersten Plattformsegments, entlang einer ersten Schaufel, entlang eines Teils des anderen oder zweiten Plattformsegments, entlang einer zweiten Schaufel, dann entlang eines Teils des ersten Plattformsegments verläuft.

5. Verfahren zur Herstellung eines einstückigen Turbinenleitradelements aus Verbundwerkstoff, umfassend eine Faserverstärkung, die durch eine wenigstens teilweise keramische Matrix verdichtet ist, wobei das Leitradelement ein Segment (20; 60) einer ringförmigen Innenplattform, ein Segment (30; 70) einer ringförmigen Außenplattform sowie wenigstens eine Schaufel (10a, 10b; 50a, 50b), die sich zwischen den Plattformsegmenten erstreckt und mit diesen verbunden ist, umfasst, wobei das Verfahren die Ausbildung eines Faserrohlings durch dreidimensionales oder Mehrlagen-Weben, das Informbringen des Faserrohlings, um einen Faservorformling des Leitradelements zu erhalten, sowie die Verdichtung des Vorformlings durch eine wenigstens teilweise keramische Matrix umfasst, **dadurch gekennzeichnet, dass**:
- ein Faserrohling (100; 200; 300; 400) aus einem einzigen gewebten Stück durch dreidimensionales oder Mehrlagen-Weben hergestellt wird, der in einer Längsrichtung wenigstens ein Muster enthaltend einen ersten Abschnitt (110a, 110b, 210a, 210b, 210c; 310), der einen Rohling eines Schaufelvorformlings bildet, einen zweiten Abschnitt (120a, 120b; 220a, 220b, 220c; 320), welcher den ersten Abschnitt an einem Längsende dessen unter Bildung von zwei einander gegenüberliegenden Klappen (121a-122a, 121 b-122b; 221 a-222a; 221 b-222b; 221 c, 222c; 321-322) fortsetzt, sowie einen dritten Abschnitt (130a, 130b; 230a, 230b, 230c; 330), welcher den ersten Abschnitt an dessen anderem Ende unter Bildung von zwei einander gegenüberliegenden Klappen (131a-132a, 131 b-132b; 231a-232a, 231b-232b, 231 c-232c; 331-332) fortsetzt, umfasst,
- der Rohling unter relativem Verschwenken zwischen den Klappen des zweiten Abschnitts und dem ersten Abschnitt, auf dessen beiden Seiten an seinem ersten Ende, aufgeklappt wird, um die Klappen des zweiten Abschnitts im Wesentlichen senkrecht zu dem ersten Abschnitt zu bringen, und unter relativem Verschwenken zwischen den Klappen des dritten Abschnitts und dem ersten Abschnitt, auf dessen beiden Seiten an seinem zweiten Ende, aufgeklappt wird, um die Klappen des dritten Abschnitts im Wesentlichen senkrecht zu dem ersten Abschnitt zu bringen, und
- der aufgeklappte Rohling in Form gebracht wird, um einen Faservorformling (140) des Leitradelements zu erhalten, mit wenigstens einem einen Schaufelvorformling bildenden Teil, der durch Informbringen eines ersten Abschnitts erhalten wird, und mit Plattformsegmentvorformlinge bildenden Teilen, die mittels der Klappen erhalten werden,
- so dass nach dem Verdichten ein einstückiges Turbinenleitradelement mit einer Faserverstärkung erhalten wird, die den Faservorformling umfasst, der im gesamten Volumen des Leitradelements und über den gesamten Umfang der oder jeder Schaufel eine Kontinuität aufweist.

6. Verfahren nach Anspruch 5, **dadurch gekennzeichnet, dass** der Rohling mit einem zweiten Abschnitt und einem dritten Abschnitt ausgebildet wird, deren Breiten dadurch, dass sie sich seitlich über die Ebene der Seitenränder des ersten Abschnitts hinaus erstrecken, größer als diejenige des ersten Abschnitts sind.

7. Verfahren nach Anspruch 6, **dadurch gekennzeichnet, dass** bei wenigstens einem der zweiten und dritten Abschnitte die beiden Klappen jeweils mit Flügeln (121'a-122'a, 131'b-132'b; 221'a-222'a, 231'c-232'c; 321'-322', 331'-332') gebildet sind, die im nicht aufgeklappten Zustand die seitlich über die Ebene der Längsränder des ersten Abschnitts hinausragenden Teile der Klappen fortsetzen, indem sie sich entlang dieser Ränder erstrecken und dabei von diesen getrennt sind, und die Flügel einer Klappe beim Aufklappen des Rohlings mit den Flügeln der anderen Klappe in gegenseitige Überlappung gebracht werden.

8. Verfahren nach Anspruch 7, **dadurch gekennzeichnet, dass** die gegenseitig überlappten Flügel miteinander verbunden werden.

9. Verfahren nach einem der Ansprüche 5 bis 8, **dadurch gekennzeichnet, dass** der Faserrohling aus einem einzigen Stück mit Wiederholung des Musters hergestellt wird, wobei der dritte Abschnitt (130a; 230a, 230b) eines ersten Musters und der zweite Abschnitt (120b; 220b, 220c) eines folgenden zweiten Musters in der Verlängerung und Fortsetzung voneinander sind, und beim Aufklappen des Rohlings der erste Abschnitt (110a; 210a) des ersten Musters gegenüber dem dritten Abschnitt (130a; 230a) des ersten Musters in eine Richtung verschwenkt wird und der erste Abschnitt (110b; 210b) des zweiten Musters gegenüber dem zweiten Abschnitt (120a; 220a) des zweiten Musters in entgegengesetzte Richtung verschwenkt wird, um die ersten Abschnitte des ersten und des zweiten Musters im Wesentlichen parallel zueinander zu bringen.

10. Verfahren nach Anspruch 9, **dadurch gekennzeichnet, dass** beim Aufklappen des Rohlings eine Klappe (121 a; 221 a, 222b) des zweiten Abschnitts des ersten Musters und eine Klappe (131b; 231 b, 232c) des dritten Abschnitts eines folgenden Musters in Verlängerung voneinander gebracht werden, um einen Vorformlingteil eines Plattformsegments bilden zu können.

11. Verfahren nach Anspruch 10, **dadurch gekennzeichnet, dass** nach dem Aufklappen des Rohlings die in Verlängerung voneinander gebrachten Klappen miteinander verbunden werden.

12. Verfahren nach einem der Ansprüche 5 bis 11, **dadurch gekennzeichnet, dass** beim Mehrlagen-Weben des Rohlings Trennbereiche (123a, 133a, 123b, 133b) zwischen zwei Lagen dazu eingerichtet sind, die Trennungen zwischen den beiden Klappen eines zweiten Abschnitts und zwischen den beiden Klappen eines dritten Abschnitts zu bilden.

13. Verfahren nach einem der Ansprüche 5 bis 12, **dadurch gekennzeichnet, dass** beim Mehrlagen-Weben des Rohlings ein Trennbereich (112a, 112b; 212a, 212b, 212c; 312) zwischen zwei Lagen entlang des gesamten ersten Abschnitts eingerichtet ist, wobei der Trennbereich nur über einen Teil der Breite des ersten Abschnitts im Abstand von dessen Längsrändern verläuft, um nach dem Informbringen einen Schaufelfaservorformling mit einem Innendurchgang, der sich über die gesamte Länge des Vorformlings erstreckt, zu bilden.

14. Turbinenleitrad, umfassend eine Vielzahl von nebeneinander angeordneten Leitradelementen, wobei jedes Leitradelement gemäß einem der Ansprüche 1 bis 4 ist oder durch ein Verfahren nach einem der Ansprüche 5 bis 13 erhalten wird.

15. Gasturbine, die mit einem Turbinenleitrad nach Anspruch 14 ausgestattet ist.

## Claims

1. A one-piece turbine nozzle element made of composite material comprising fiber reinforcement densified by a matrix that is at least partially ceramic, the nozzle element comprising an inner annular platform sector (20; 60), an outer annular platform sector (30; 70), and at least one vane (10a, 10b; 50a, 50b) extending between the platform sectors and connected to both of them, the platform sectors extending on either side of their connection zones with the or each vane, the element being **characterized in that** the fiber reinforcement comprises a fiber structure that is woven by three-dimensional or multi-layer weaving and that presents continuity throughout the volume of the nozzle element and over the entire periphery of the or each vane.

2. A nozzle element according to claim 1, **characterized in that** the or each vane presents an internal longitudinal passage (12a, 12b) extending over the entire length of the vane and opening out in the platform sectors.

3. A nozzle element according to claim 1, **characterized in that** the or each vane is solid.

4. A turbine nozzle element according to any one of claims 1 to 3, **characterized in that** it includes at least two vanes (10a, 10b; 50a, 50b) extending between the platform sectors, and **in that** the fiber structure includes yarns that follow a continuous path extending successively along a portion of a first platform sector, along a first vane, along a portion of the other or second platform sector, along a second vane, and then along a portion of the first platform sector.

5. A method of fabricating a single-piece turbine nozzle element made of composite material comprising fiber reinforcement densified by a matrix that is at least partially ceramic, the nozzle element comprising an inner annular platform sector (20; 60), an outer annular platform sector (30; 70), and at least one vane (10a, 10b; 50a, 50b) extending between the platform sectors and connected to both of them, the method comprising making a fiber blank by three-dimensional or multi-layer weaving, shaping the fiber blank to obtain a fiber preform of the nozzle element, and densifying the preform with a matrix that is at least partially ceramic, the method being **characterized by**:
· making a woven single-piece fiber blank (100; 200; 300; 400) by three-dimensional or multi-layer weaving, the blank comprising in a longitudinal direction at least one pattern including a first segment (110a, 110b, 210a, 210b, 210c; 310) forming a vane preform blank, a second segment (120a, 120b; 220a, 220b, 220c; 320) extending the first segment at one longitudinal end thereof and forming two flaps (121a-122a, 121b-122b; 221a-222a; 221b-222b; 221c, 222c; 321-322) situated facing each other, and a third segment (130a, 130b; 230a, 230b, 230c; 330) extending the first segment at its other end and forming two flaps (131a-132a, 131b-132b; 231a-232a, 231b-232b, 231c-232c; 331-332) situated facing each other;
• unfolding the blank with relative pivoting between the flaps of the second segment and the first segment on either side thereof at its first end so as to cause the flaps of the second segment to extend substantially perpendicularly to the first segment, and with relative pivoting between the flaps of the third segment and the first segment on either side thereof at its second end in order to cause the flaps of the third segment to be substantially perpendicular to the first segment; and
• shaping the unfolded blank in order to obtain a fiber preform (140) of the nozzle element with at least a vane preform-forming portion obtained by shaping the first segment, and platform sector preform-forming portions obtained from the flaps;
whereby, after densification, a single-piece turbine nozzle element is obtained with fiber reinforcement comprising the fiber preform that presents continuity throughout the volume of the nozzle element and over the entire periphery of the or each vane.

6. A method according to claim 5, **characterized in that** the blank is made with a second segment and a third segment of widths that are greater than the width of the first segment and extending laterally beyond the lateral edges of the first segment.

7. A method according to claim 6, **characterized in that**, in at least one of the second and third segments, each of the two flaps is formed with tabs (121'a-122'a, 131'b-132'b; 221'a-222'a, 231'c-232'c; 321'-322', 331'-332') that, in the non-unfolded state, extend the portions of the flaps that project laterally beyond the longitudinal edges of the first segment, extending along said edges while being separate therefrom, and the tabs of a flap are caused to overlap mutually with the tabs of the other flap when the blank is unfolded.

8. A method according to claim 7, **characterized in that** the mutually overlapping tabs are bonded together.

9. A method according to any one of claims 5 to 8, **characterized in that** the fiber blank is made as a single piece with repetition of said pattern, the third segment (130a; 230a, 230b) of a first pattern and the second segment (120b; 220b, 220c) of a consecutive second pattern extending each other and being in continuity with each other, and while unfolding the blank, the first segment (110a; 210a) of the first pattern is caused to pivot in one direction relative to the third segment (130a; 230a) of the first pattern and the first segment (110b; 210b) of the second pattern is caused to pivot in the opposite direction relative to the second segment (120a; 220a) of the second pattern in order to cause the first segments of the first and second patterns to be substantially parallel to each other.

10. A method according to claim 9, **characterized in that** while unfolding the blank, a flap (121a; 221a, 222b) of the second segment of the first pattern and a flap (131b; 231b, 232c) of the third segment of a consecutive pattern are caused to extend each other in order to be capable of forming a portion of a platform sector preform.

11. A method according to claim 10, **characterized in that** after the blank has been unfolded, the flaps that have been caused to extend each other are bonded together.

12. A method according to any one of claims 5 to 11, **characterized in that** while performing multi-layer weaving of the blank, non-interlinked zones (123a, 133a, 123b, 133b) are formed between two layers in order to form the separations between the two flaps of a second segment and between the two flaps of a third segment.

13. A method according to any one of claims 5 to 12, **characterized in that**, during multi-layer weaving of the blank, a non-interlinked zone (112a, 112b; 212a, 212b, 212c; 312) is formed between two layers all along the first segment, the non-interlinked zone extending over a portion only of the width of the first segment, at a distance from its longitudinal edges, so that after shaping it forms a vane fiber-preform with an internal passage that extends over the entire length of the preform.

14. A turbine nozzle comprising a plurality of juxtaposed nozzle elements, each nozzle element being in accordance with any one of claims 1 to 4 or being obtained by a method in accordance with any one of claims 5 to 13.

15. A gas turbine having a turbine nozzle according to claim 14.
